Europäisches Patentamt

European Patent Office

Office européen des brevets

(19)

(11) **EP 1 107 887 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(21) Anmeldenummer: **99955657.4**

(22) Anmeldetag: **03.09.1999**

(51) Int Cl.⁷: **B60R 21/32**

(86) Internationale Anmeldenummer:
**PCT/DE99/02803**

(87) Internationale Veröffentlichungsnummer:
**WO 00/013944 (16.03.2000 Gazette 2000/11)**

(54) **Verfahren zum Steuern eines Insassenschutzmittels mittels dynamischer Schaltschwellen sowie Steuervorrichtung hierfür**

Method for Controlling an Occupant Protection Means Using Dynamic Control Threshold Values and Corresponding Control Device

Procédé pour commander un moyen de protection d'occupant dans un véhicule à l'aide de seuils de commutation dynamiques, et dispositif de commande correspondant

(84) Benannte Vertragsstaaten:
**DE FR GB IT**

(30) Priorität: **04.09.1998 US 99178 P**

(43) Veröffentlichungstag der Anmeldung:
**20.06.2001 Patentblatt 2001/25**

(73) Patentinhaber: **SIEMENS AKTIENGESELLSCHAFT 80333 München (DE)**

(72) Erfinder:
- **FESER, Michael D-93092 Barbing (DE)**
- **FRIMBERGER, Manfred D-84061 Ergoldsbach (DE)**

(56) Entgegenhaltungen:
**EP-A- 0 727 336       EP-A- 0 950 583**
**DE-A- 4 207 153       DE-A- 19 707 307**
**US-A- 5 068 793**

**Beschreibung**

Die Erfindung betrifft ein Verfahren zum Steuern eines Insassenschutzmittels in einem Fahrzeug nach dem Oberbegriff von Patentanspruch 1 sowie eine Steuervorrichtung hierfür (siehe z.B. WO 94/14638-A).

Bei einem bekannten Verfahren zum Steuern eines Insassenschutzmittels in einem Fahrzeug liefert ein Aufprallsensor ein Aufprallsignal. Eine aus dem Aufprallsignal abgeleitete Aufprallgröße wird daraufhin mit einer Schwelle verglichen. Das Insassenschutzmittel wird gesteuert in Abhängigkeit vom Überschreiten der Schwelle durch die Aufprallgröße. Die Schwelle enthält dabei in der Regel zumindest einen Term, der durch das Aufprallsignal bestimmt ist.

Gewöhnlich enthält dabei die Schwelle mehrere additiv miteinander verknüpfte Terme, wobei jeder Term für sich, also ohne Berücksichtigung des vorgegebenen Vorzeichens, mit positiven Werten in der Schwelle berücksichtigt wird. Bei der o.g. gattungsbildenden WO 94/14638-A ist die Schwelle beispielsweise zusammengesetzt aus einem konstanten Term, zuzüglich eines Terms für die mittlere Beschleunigung und abzüglich eines sogenannten Dynamikterms, der Maxima und Minima im Beschleunigungssignal berücksichtigt. Nach dem Stand der Technik liefert also jeder Schwellwertterm zunächst einen positiven Beitrag. Die Konstante wie auch der Term der mittleren Beschleunigung gehen mit positivem Vorzeichen in den Schwellwert ein, sodass ihre Beiträge nur zur Erhöhung der Schwelle in ausgeprägter oder wenig ausgeprägter Form beitragen können. Der sogenannte Dynamikterm dagegen geht mit einem vorgegebenen negativen Vorzeichen in die Schwellwertberechnung ein, sodass dieser Term, der ureigentlich positive Werte liefert, aufgrund des vorgegebenen Vorzeichens die Schwelle erniedrigende Werte liefert. Die vorgegebene Kombination der einzelnen Terme kann daher durchaus zu einem Ansteigen oder Abfallen der Schwelle führen. Jeder Term für sich betrachtet kann jedoch ausschließlich positive Beiträge liefern.

Weitere Verfahren dieser Art sind aus der EP-A-0 727 336 sowie aus der nicht vorveröffentlichten EP-A-0 950 583 bekannt.

Aufgabe der Erfindung ist es, ein Verfahren sowie eine Steuervorrichtung für ein Insassenschutzmittel in einem Fahrzeug anzugeben, bei dem die Schwelle äußerst flexibel auf das den Unfallhergang charakterisierende Aufprallsignal reagiert.

Der das Verfahren betreffende Teil der Erfindungsaufgabe wird durch die Merkmale des Patentanspruchs 1 gelöst. Der die Vorrichtung betreffende Teil der Erfindungsaufgabe wird durch die Merkmale des Patentanspruchs 9 gelöst.

Bei der Erfindung liefert ein einen Unfall oder einen Aufprall erkennender Sensor ein Aufprallsignal. Der Sensor kann als Beschleunigungssensor ausgebildet sein, der ein Beschleunigungssignal liefert. Dabei ist der Beschleunigungssensor in seiner Empfindlichkeitsachse vorzugsweise in diejenige Richtung ausgerichtet, aus der ein Aufprall erkannt werden soll. Beschleunigungssensoren zur Seitenaufprallerkennung sind dabei vorzugsweise quer zur Fahrzeuglängsachse empfindlich und im Fahrzeugzentrum aber auch fahrzeugrandseitig an Seitentüren oder Türschwellern befestigt. Ein Beschleunigungssensor zur Frontaufprallerkennung ist vorzugsweise ebenfalls im Fahrzeugzentrum, gegebenenfalls aber auch fahrzeugfrontseitig angeordnet und nimmt Beschleunigungssignale längs der Fahrzeuglängsachse auf. Als Aufprallsensoren können jedoch auch Sensoren zum unmittelbaren oder mittelbaren Eindringen eines Hindernisses in das Fahrzeug vorgesehen sein. In unmittelbarer Art nimmt beispielsweise ein kapazitiv ausgebildeter Deformationssensor das Eindringen eines Hindernisses auf, bei dem die Fahrzeugaussenhaut als eine Elektrode und eine weitere mit der Fahrzeugaussenhaut zusammenwirkende stationär installierte Elektrode vorgesehen sind. In mittelbarer Weise kann ein Aufprallsensor vorzugsweise durch das Aufnehmen eines Luftdruckes in einem Hohlraum der Fahrzeugtüre einen Seitenaufprall erkennen. Infolge der durch das Eindringen des Hindernisses eingeleiteten Deformation der Fahrzeugtüre wird das Volumen des Hohlraumes verändert, was zu einem Luftdruckanstieg führt, der in dem als Drucksignal ausgebildeten Aufprallsignal erkannt werden kann.

Gewöhnlich wird aus einem solchen Aufprallsignal eine Aufprallgröße abgeleitet, die mit einer Schwelle verglichen wird. Die Aufprallgröße kann dabei das Aufprallsignal selbst sein oder vorzugsweise durch mathematische Berechnungen aus dem Aufprallsignal abgeleitet werden. Vorzugsweise wird dabei als Aufprallgröße ein partieller Geschwindigkeitsverlust. auch Delta-V genannt, verwendet. Hierzu wird das Beschleunigungssignal, das im folgenden als Aufprallsignal verwendet wird, ab Beginn des Aufpralls integriert. Das integrierte Beschleunigungssignal liefert daher den Geschwindigkeitsabbau ab Aufprallbeginn. Ein partieller Geschwindigkeitsverlust wird nun durch die Differenz des aktuellen Geschwindigkeitswertes und eines in einem Speicher abgelegten Geschwindigkeitswertes, der zu einem früheren Zeitpunkt ermittelt wurde, gebildet. Dieser partielle Geschwindigkeitsverlust wird vorzugsweise mit der Schwelle verglichen.

Die Schwelle ist dabei variabel ausgebildet und kann über der Zeit unterschiedliche Schwellwerte annehmen. Gewöhnlich setzt sich die Schwelle dabei additiv aus mehreren Termen zusammen. Jeder Term ist ein in sich inhaltlich geschlossener mathematischer Ausdruck. Ein Term der Schwelle kann dabei eine Konstante sein. Ein weiterer Term kann dabei z.B. ein zeitlineares Glied aufweisen. Vorzugsweise enthält die Schwelle also mehrere additiv zueinander in Beziehung gesetzte Terme.

Die Schwelle enthält dabei zumindest einen Term, der durch das Aufprallsignal bestimmt ist. Eine Bestimmung durch das Aufprallsignal kann in unterschiedlicher Ausprägung vorgesehen sein: So kann beispielsweise ein Term das Aufprallsignal oder ein aus dem Aufprallsignal abgeleitetes Signal in direkter Proportionalität enthalten. Damit ist die der Schwellwertverlauf zumindest in diesem Term proportional zum Aufprallsignal. In einer weiteren Ausbildung kann ein solcher Term unter Zuhilfenahme von logischen Verknüpfungen durch das Aufprallsignal bestimmt sein. So kann dieser Term einen ersten konstanten Wert vorsehen, wenn das Aufprallsignal einen zugeordneten Wert unterschreitet. Ein zweiter höherer konstanter Wert kann vorgesehen sein, sobald das Aufprallsignal den zugeorndeten Wert überschreitet.

Das Insassenschutzmittel wird in Abhängigkeit vom Überschreiten der Schwelle durch die Aufprallgröße gesteuert. Dabei kann das Insassenschutzmittel direkt ausgelöst werden, wenn die Schwelle durch die Aufprallgröße überschritten wird. Das Überschreiten der Schwelle durch die Aufprallgröße kann alternativ jedoch als eines von mehreren logisch miteinander verknüpften und insbesondere boolesch miteinander verknüpften Auslösekriterien sein, wobei das Überschreiten der Schwelle nur z.B. mit der Erfüllung eines weiteren Kriteriums zum Aktivieren des zugeordneten Insassenschutzmittels zusammenwirkt.

Als Insassenschutzmittel können Airbags, insbesondere Fahrer-,Beifahrer-,Seiten-,Kopf-,Torax-, oder sonstige Airbags vorgesehen sein, wie auch Gurtstraffer oder Überrollschutzmittel.

Erfindungsgemäß ist zumindest ein Term der Schwelle derart ausgebildet, dass er je nach Ausbildung des Aufprallsignals einen die Schwelle erhöhenden oder die Schwelle erniedrigenden Beitrag liefert. Danach kann der bloße Term sowohl positive als auch negative Werte in Abhängigkeit des Aufprallsignals liefern. Wird ein derartiger Term also mit einem a priori festgelegten positiven Vorzeichen in die Schwelle eingebracht, so kann der Term die Schwelle erhöhen oder erniedrigen, wobei eine Gesamterhöhung der Schwelle bzw. eine Gesamterniedrigung natürlich auch von den Beiträgen weiterer Terme abhängt. Wird ein solcher Term mit einem a priori festgelegten negativen Vorzeichen in die Schwelle eingebracht, so kann der Term bei der Lieferung negativer Beiträge die Schwelle erhöhen, bei der Lieferung positiver Beiträge die Schwelle erniedrigen. Grundlegend für die Erfindung ist, dass also ein singulärer Term derart ausgebildet ist, dass er in äußerst flexibler Art und Weise abhängig vom Aufprallsignal äußerst schnell auf dieses reagieren kann und dementsprechend die Schwelle nicht nur in einem geringen oder größeren Maße erhöhen kann, sondern daß dieser Term die Schwelle gleichzeitig auch senken kann, wenn das Aufprallsignal ein Absenken der Schwelle als angezeigt erscheinen läßt.

Der Unteranspruch 2 kennzeichnet einen solchen Term, der durch einen aus dem Aufprallsignal abgeleiteten Geschwindigkeitsverlust des Fahrzeugs ab Aufprallbeginn bestimmt ist. Der Geschwindigkeitsverlust wird dabei gewöhnlich durch Integration der Beschleunigung ab Aufprallbeginn, d.h. ab Überschreitung eines initialen Grenzwertes durch die aufgenommene Beschleunigung ermittelt. Der Geschwindigkeitsverlust gibt hierbei den gesamten Energieabbau beim Aufprall wieder. Dieser Geschwindigkeitsverlust wird während der Zeitdauer des gesamten Aufpralls ermittelt und liefert zu jeder Zeit die Information über die ab Aufprallbeginn bis zum jeweiligen Zeitpunkt abgebaute Crashenergie. Mithilfe dieses Terms geht also eine energetische Betrachtung des Aufpralls in den Schwellwertverlauf ein, sodass ein Auslösen des Insassenschutzmittels abhängig von der abgebauten kinetischen Energie und damit abhängig von der Crashschwere erzielt wird.

Die abhängigen Ansprüche 3 bis 5 kennzeichnen einen weiteren Term der Schwelle, der auf das Erkennen von Oszillationen im Aufprallsignal gerichtet ist. Starke Oszillationen im Aufprallsignal lassen gewöhnlich auf einen Aufprall schließen, bei dem das Insassenschutzmittel nicht ausgelöst werden soll. Solche sogenannten Misuse-Stöße werden beispielweise durch einen Hammerschlag gegen die Fahrzeugkarosserie eingeleitet. Ein solcher Hammerschlag kann zu starken Verzögerungsampliduten am Fahrzeug führen. Jedoch kann das Fahrzeug die übertragene Energie durch starkes Schwingen abbauen, wohingegen bei einem schweren Aufprall, bei dem das Insassenschutzmittel ausgelöst werden soll, gewöhnlich ein großer Impuls auf das Fahrzeug einwirkt, sodass ein Abbau der übertragenen Energie durch Ausschwingen des Fahrzeugs nicht möglich ist. Eine Betrachtung der Oszillationen in dem Aufprallsignal dient also vorzugsweise dazu, Misuse-Aufprälle von schweren Unfällen zu unterscheiden. Der nach den Unteransprüchen 3 bis 5 ausgebildete Term kann alternativ zu dem Term des Anspruchs 2, vorzugsweise aber zusätzlich und insbesondere additiv zu dem Term des Anspruchs 2 in die Schwelle eingehen.

Gleiches gilt für den nach Anspruch 6 erfindungsgemäß vorgeschlagenen Term. Dieser Term dient ebenfalls der Unterscheidung eines Misuse-Aufpralls von einem "normalen" Aufprall. Kennzeichnend für einen Misuse-Aufprall ist wiederum eine starke Oszillationsneigung im Aufprallsignal, wobei das Aufprallsignal insbesondere um den Nullpunkt herum schwingt. Eine durch einen kurzen Stoß (Misuse) übertragene Energie kann sich durch ein Pendeln des Fahrzeugs abbauen. Demgegenüber erweist das Aufprallsignal bei einem normalen Aufprall vorwiegend Werte in einer Verzögerungsrichtung auf. Durch Betrachtung der Zeitpunkte, zu denen das Aufprallsignal einen oberen Schwellwert überschreitet, und andererseits einen unteren Schwellwert unterschreitet, kann die Schwelle in vorteilhafter Weise beeinflußt werden: Unterschreitet das Aufprallsignal den unteren Schwellwert und liegt dieser Schwellwert in einem Wertebereich, in dem ein Aufprallsignal resultierend aus einem normalen Aufprall erwartet wird - es wird bei einem Stoß regelmäßig eine Verzögerung, also eine negative Beschleunigung erwartet, so wird die Schwelle während der Zeitspanne, in der das Aufprallsignal den oberen Grenzwert überschreitet, betragsmäßig sukzessive inkrementell erniedrigt und ein Auslösen erleichtert. Überschreitet das Aufprallsignal jedoch einen oberen Grenzwert, welcher vorzugsweise ein dem unteren Grenzwert entgegengesetztes Vorzeichen aufweist und damit Beschleunigungswerte entgegen der Aufprallrichtung kennzeichnet, so werden während dieser Zeitspanne sukzessive inkrementelle Werte zur Schwelle betragsmäßig addiert und somit ein Auslösen erschwert.

Die Unteransprüche 7 und 8 kennzeichnen einen Term, der ebenfalls neben den anderen vorbeschriebenen Termen vorzugsweise additiv in die Schwellwertberechnung eingeht. Mit einem derart ausgebildeten Term werden durch das Eindringen eines Hindernisses bei einem Aufprall signifikante Beschleunigungspulse im Aufprallsignal als Indikator für eine mechanische Deformation der Fahrzeugkarosseriestruktur erkannt und die Schwelle dementsprechend beeinflusst.

Weitere vorteilhafte Ausbildungen der Erfindung sind durch die weiteren Unteransprüche gekennzeichnet.

Die Erfindung und ihre Weiterbildungen werden anhand von Ausführungsbeispielen unter Zuhilfenahme der Zeichnungen näher erläutert. Es zeigen:

Figur 1: ein Blockschaltbild zur Bildung der Schwelle,

Figur 2: einen beispielhaften zeitlichen Verlauf der einzelnen, die Schwelle bildenden Terme,

Figur 3: die Wirkungsrichtung der einzelnen, die Schwelle bildenen Terme,

Figur 4: einen beispielhaften Beschleunigungsverlauf zur Bildung des ASF-Termes,

Figur 5: Zeitverläufe zur Erläuterung des ASF-Termes,

Figur 6: eine Kennlinie zur Bildung des ASF-Termes,

Figur 7: einen beispielhaften Beschleunigungsverlauf zur Erläuterung des CPF-Termes,

Figur 8: Zeitverläufe des CPF-Termes,

Figur 9: Zeitverläufe zur Erläuterung des CDC-Termes.

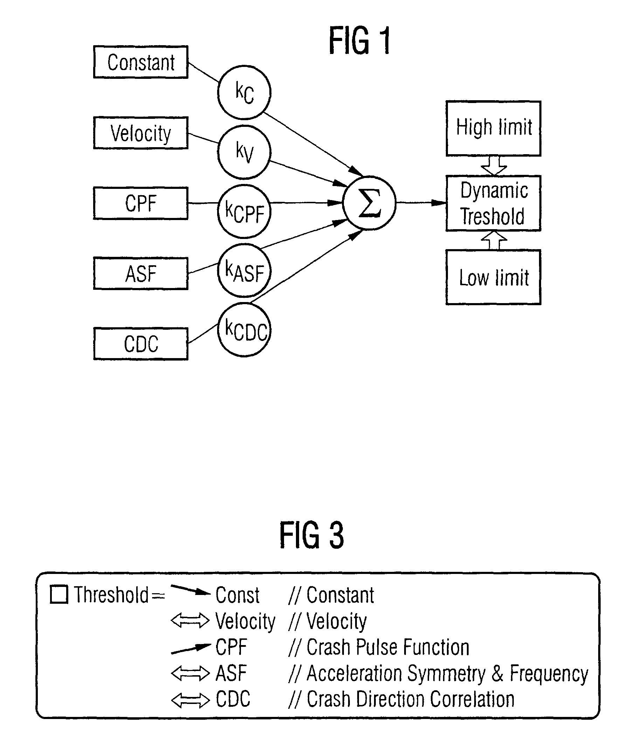

Figur 1 zeigt ein Blockdiagramm zur Berechnung einer Auslöseschwelle eines Auslösealgorithmus zum Steuern eines Insassenrückhaltemittels. Die Auslöseschwelle setzt sich dabei additiv aus den Termen CDC, ASF, CDF, Velocity und Constant zusammen, wobei jeder Term mit einem Gewichtsfaktor $K_{CDC}$ bzw. $K_{ASF}$ bzw. $K_{CPF}$ bzw. $K_V$ bzw. $K_C$ multipliziert wird. Eine derart gebildete Auslöseschwelle kann gemäß Figur 1 Werte in einem äussert großen Wertebereich annehmen. Auslöse-inhaltliche wie auch rechnertechnische Gründe können für eine vorteilhafte Begrenzung der Schwelle an einem oberen und an einem unteren Ende gemäß Figur 1 sprechen. Die einzelnen Terme werden im folgenden näher erläutert. Mit Ausnahme des Termes "Constant" sind alle anderen Terme durch ein von einem Aufprallsensor, im vorliegenden Fall einem Beschleunigungssensor - geliefertes Aufprallsignal bestimmt.

Dieses als Aufprallsignal fungierende Beschleunigungssignal wird gewöhnlich in analoger Form geliefert und wird einem Analog-Digital-Wandler zugeführt. Das derartig digitalisierte Signal wird einem Mikrokontroller zugeführt, der eine Auslöseentscheidung herbeiführen soll. Dabei wird das digitalisierte Beschleunigungssignal vorzugsweise folgenden Operationen im Mikrokontroller unterzogen, die eine Auslöseentscheidung vorbereiten: Das digitalgewandelte Beschleunigungssignal wird digital gefiltert, gegebenenfalls integriert, gegebenenfalls differenziert. Gegebenenfalls werden Summen oder Differenzen zwischen unterschiedlich ermittelten Mittelwerten gebildet. Zudem werden aus dem Beschleunigungssignal zumindest einer, vorzugsweise aber mehrere Terme der Schwelle abgeleitet. Ferner wird aus dem Beschleunigungssignal eine Aufprallgröße abgeleitet, die im folgenden mit der Schwelle verglichen wird. Als Aufprallgröße bietet sich der sogenannte partielle Geschwindigkeitsverlust an. Diese Größe gibt den partiellen Energieabbau bei einem Aufprall wieder. Mit anderen Worten gibt diese Größe, die vorzugsweise mit Delta-V bezeichnet wird, die Information über die Schwere eines Aufpralls in einem definierten kurzzeitigen Zeitfenster wieder. Der partielle Geschwindigkeitsverlust kann auf unterschiedliche Arten ermittelt werden: Einerseits kann das Beschleunigungssignal zuerst integriert und damit ab einem initialen Zeitpunkt der Geschwindigkeitsabbau zu jedem Zeitpunkt ermittelt werden. Der partielle Geschwindigkeitsverlust ergibt sich dann aus

$$\Delta v(t) = v(t) - v(t - k),$$

mit k als Länge des Zeitfensters, über den der partielle Geschwindigkeitsverlust berechnet wird.

Alternativ wird der partielle Geschwindigkeitsverlust Delta-V nach folgender Formel berechnet:

$$\Delta v(t) = \sum_{K=0}^{KMax} a(t - k)$$

Die derart gebildete Aufprallgröße Delta-V wird im Folgenden mit der dynamisch ausgebildeten Schwelle verglichen. Eine mögliche Strategie zum Auslösen des Insassenschutzmittels kann darin liegen, dass das Schutzmittel aktiviert wird, sobald die Aufprallgröße die Schwelle überschreitet. Vorzugsweise wird das Schutzmittel aber ausgelöst, wenn die Schwelle durch die Aufprallgröße überschritten wird und gleichzeitig ein Mindestgeschwindigkeitsverlust erkannt wird. Zusätzlich zu letzterer Auslösestrategie kann das Insassenschutzmittel auch dann ausgelöst werden, wenn ein überaus großer Geschwindigkeitsverlust erkannt wird.

Der Geschwindigkeitsverlust berechnet sich nach folgender Formel:

$$\mathrm{v(t)} \;=\; \int a(t).dt = \sum_i a_i$$

Vorgenannte Auslösestrategie entfaltet ihre Vorteile darin, dass bei einem äusserst starken Geschwindigkeitsverlust Zeit durch Beschreiten des Alternativauslösepfades gewonnen wird. Ein Auslösen des Schutzmittels durch Überschreiten des Schwellwertes durch die Aufprallgröße wird andererseits nur dann erlaubt, wenn ein Mindestgeschwindigkeitsverlust erkannt wird. Dieser Mindestgeschwindigkeitsverlust kann als eine Art "Safingfunktion" interpretiert werden.

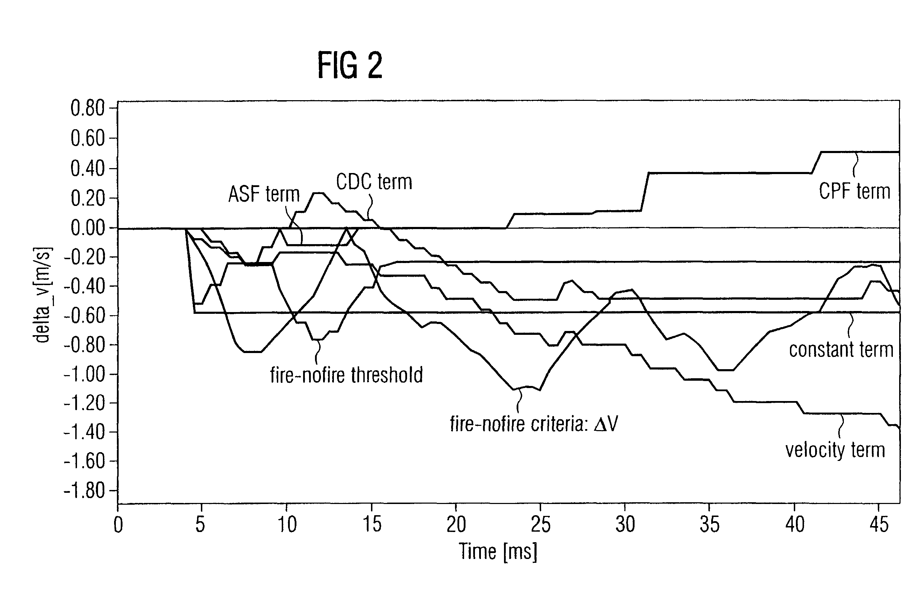

Figur 2 zeigt die in Figur 1 aufgelisteten Terme der dynamischen Schwelle über der Zeit und einzeln aufgetragen zu einem nicht eingezeichneten Beschleunigungssignal. Ferner ist in dem Diagramm die aus den einzelnen Termen zusammengesetzte Schwelle "Fire-Nofire threshold" ersichtlich, sowie die Aufprallgröße "Fire-Nofire criteria: $\Delta v$", die mit der Schwelle verglichen wird. Aus Figur 2 geht insbesondere hervor, dass mit Ausnahme des Konstant-Termes sowie des CPF-Termes, der streng monoton steigend ist, jeder andere Term in Abhängigkeit des aufgenommenen Aufprallsignals fallende und steigende Abschnitte aufweist. Erfindungsgemäß können diese Terme jedoch wie gemäß Figur 2 insbesondere beim CDC-Term hervorgeht, sowohl positive als auch negative Beiträge abhängig von der Ausbildung des Aufprallsignals zur Schwelle liefern. Dabei liefert der CDC-Term zwischen der fünften und der zehnten Millisekunde einen negativen Beitrag zur Schwelle, zwischen der zehnten und etwa sechzehnten Millisekunde einen positiven Beitrag und ab der sechzehnten Millisekunde wiederum negative Beiträge.

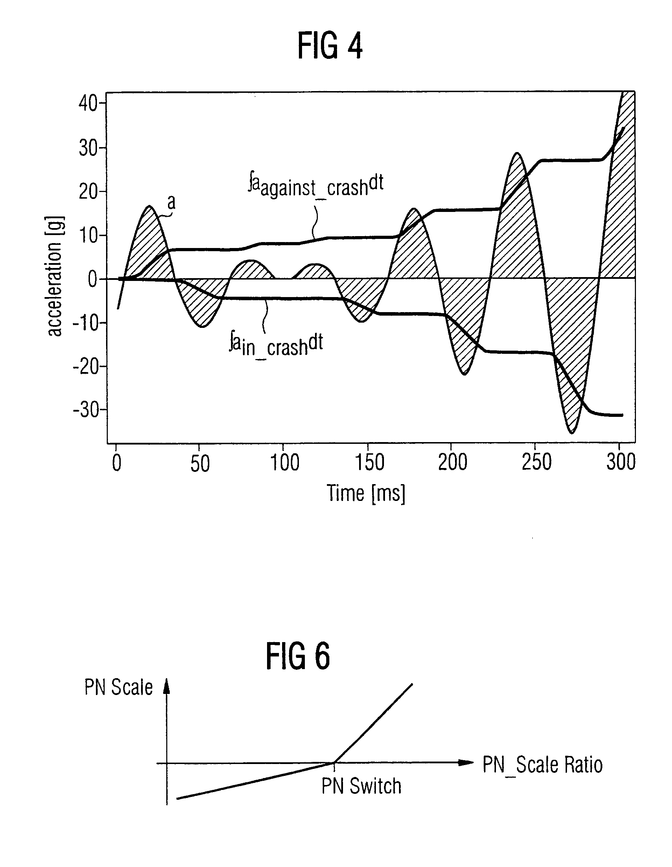

Figur 3 wiederum listet die einzelnen Terme als Bestandteile auf und zeigt mit einer in Form von Pfeilen angedeuteten Wirkungsrichtung die mögliche Einflussnahme des jeweiligen Termes auf die Schwelle an: So kann der Konstant-Term nur zu einer Erniedrigung der Schwelle führen, wohin gegen der CPF-Term nur zu einer Erhöhung der Schwelle führen kann. Die übrigen Terme können erfindungsgemäß sowohl zu einer Erhöhung als auch zu einer Erniedrigung der Schwelle Beiträge liefern.

Der Velocity-Term der Schwelle berechnet sich durch analoge oder digitale Integration des Beschleunigungssignals ab Aufprallbeginn, wobei der Aufprallbeginn durch das Überschreiten einer g- oder 2-g-hohen Startschwelle gekennzeichnet ist. Der Velocity-Term kann zur Schwelle subtrahiert oder addiert werden, sodass die Schwelle mehr oder weniger auslöseempfindlich eingestellt wird.

Beim ASF-Term werden die positiven und negativen Anteile im Beschleunigungssignal betrachtet. Über diese Anteile wird getrennt voneinander integriert, sodass ein Summenwert über die positiven Beschleunigungsanteile und ein Summenwert über die negativen Beschleunigungsanteile ermittelt wird.

Figur 4 zeigt anhand eines beispielhaften Beschleunigungssignales a schraffiert hinterlegte Anteile, wobei die Anteile unterhalb der Nulllinie Beschleunigungsanteile in Crashrichtung, also $a_{in-crash}$, die Beschleunigungsanteile oberhalb der Nulllinie dagegen in Crashgegenrichtung $a_{against-crash}$ sind. Die Aufsummierung der jeweiligen negativen bzw. positiven Beschleunigungsanteile liefern die beiden in das Diagramm eingezeichneten Kurvenintegrale. Die aufsummierten positiven und negativen Anteile werden im folgenden zueinander ins Verhältnis gesetzt.

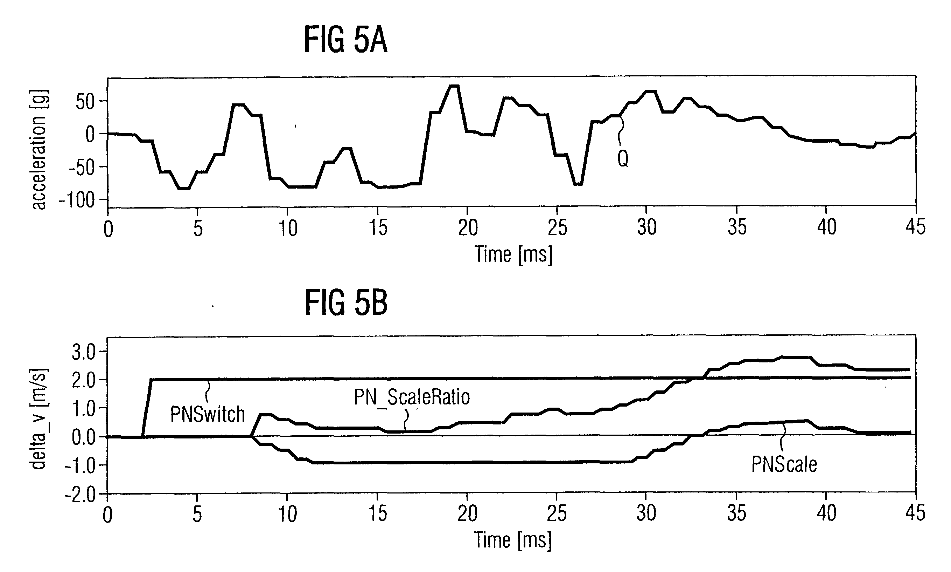

Figur 5a zeigt hierzu einen beispielhaften Beschleunigungsverlauf über der Zeit, zu dem in Figur 5b das Verhältnis aus positiven aufsummierten Beschleunigungsanteilen zu negativen aufsummierten Beschleunigungsanteilen P_Scale Ratio eingezeichnet ist. Die Figur zeigt, dass anfänglich das Verhältnis leicht zugunsten der positiven Anteile im Beschleunigungssignal aufgrund des positiven Beschleunigungshubes bei etwa siebeneinhalb Millisekunden überwiegt. Diese Anteile werden jedoch durch die zwischen der ca. achten und achtzehnten Millisekunde vorherrschenden negativen Beschleunigungsanteilen nahezu ausgeglichen, sodass das Verhältnis PN_ScaleRatio in diesem Zeitraum sich auf die Nulllinie zubewegt. Ab der achtzehnten Millisekunde ist jedoch ein deutliches Übergewicht positiver Beschleunigungsanteile im Aufprallsignal festzustellen, sodass das Verhältnis PN_ScaleRatio kontinuierlich ansteigt.

Der ASF-Term, der letztendlich in die Schwelle eingeht, wird dadurch gebildet, dass von dem vorgegebenen Grenzwert PNSwitch das Verhältnis PN_ScaleRatio abgezogen wird. Die Schwelle verhält sich also nunmehr proportional zu dieser Differenz PNScale, was insbesondere auch aus Figur 5b hervorgeht. Dabei kann vorgesehen sein, dass der Beitrag des ASF-Termes wie auch in Figur 5b gezeigt nach oben und/oder nach unten begrenzt sein kann. Der ASF-Term liefert also gemäß folgendem Beispiel einen die Schwelle in den negativen Wertebereich hinein vergrößernden Beitrag sobald überwiegend positive Beschleunigungsanteile im Signal festgestellt werden. Da die vorliegende Figurenbeschreibung im wesentlichen mit Ausführungsbeispielen dergestalt versehen ist, die ein Auslösen eines Insassenschutzmittels vorsehen, wenn eine bestimmte Fahrzeugverzögerung als negative Fahrzeugbeschleunigung vorliegt, so ist ein Auslösen nur dann erwünscht, wenn die Schwelle im negativen Wertebereich durch die negativ ausgebildete Aufprallgröße überschritten wird. Ein Überschreiten in diesem Sinne ist mathematisch gesehen ein Unterschreiten der negativen Schwelle durch die negative Aufprallgröße. Wird also diese negative Schwelle weiter in den negativen Bereich gezogen, so wird ein Auslösen erschwert, wie es zwischen der siebten und zweiunddreißigsten Millisekunde nach Figur 5b der Fall ist. Die überwiegend positiven Beschleunigungsanteile im Beschleunigungssignal in dieser Zeitspanne deuten auf einen Misuse-Aufprall hin, da bei einem normalen Aufprall vorwiegend negative Beschleunigungsanteile erwartet werden, sodass ein Auslösen durch ein betragsmässiges Erhöhen der Schwelle erschwert wird. Werden dagegen vorwiegend negative Beschleunigungsanteile im Aufprallsignal festgestellt, so wird ein Auslösen erleichtert in dem Sinne, dass der Betrag der Schwelle verringert wird, im vorliegenden Fall die Werte der negativen Schwelle heraufgesetzt und somit ein Auslösen erleichtert wird.

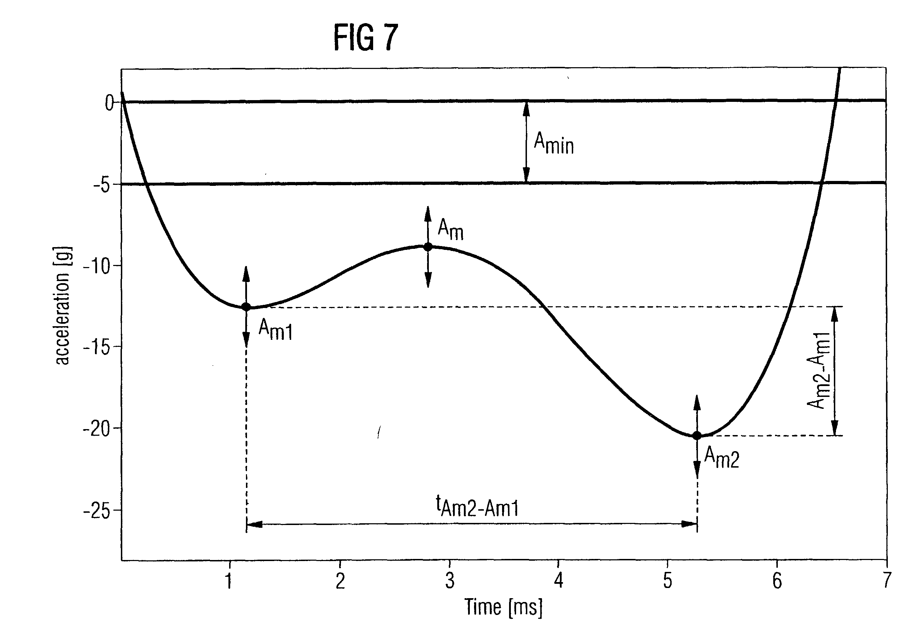

Figur 6 zeigt eine Kennlinie für eine besonders vorteilhafte Ausgestattung des ASF-Termes. Dabei wird der vorbeschriebene und als Differenz ausgebildete ANF-Term PNScale mit einem Gewichtsfaktor versehen, der dergestalt ausgebildet ist, dass bei einem positiven ASF-Term, d.h. bei vorwiegend positiven Beschleunigungsanteilen und dem Verdacht eines Misuse-Aufpralls, der ASF-Term die Schwelle in größerem Maße heraufsetzt, als dies beim Herabsetzen des Schwellenbetrages bei einem Aufprallsignal mit vorwiegend negativen Beschleunigunsanteilen der Fall wäre. Eine solche Ausgestaltung des ASF-Termes liegt darin begründet, dass bei einem Misuse-Aufprall keinesfalls ausgelöst werden sollte.

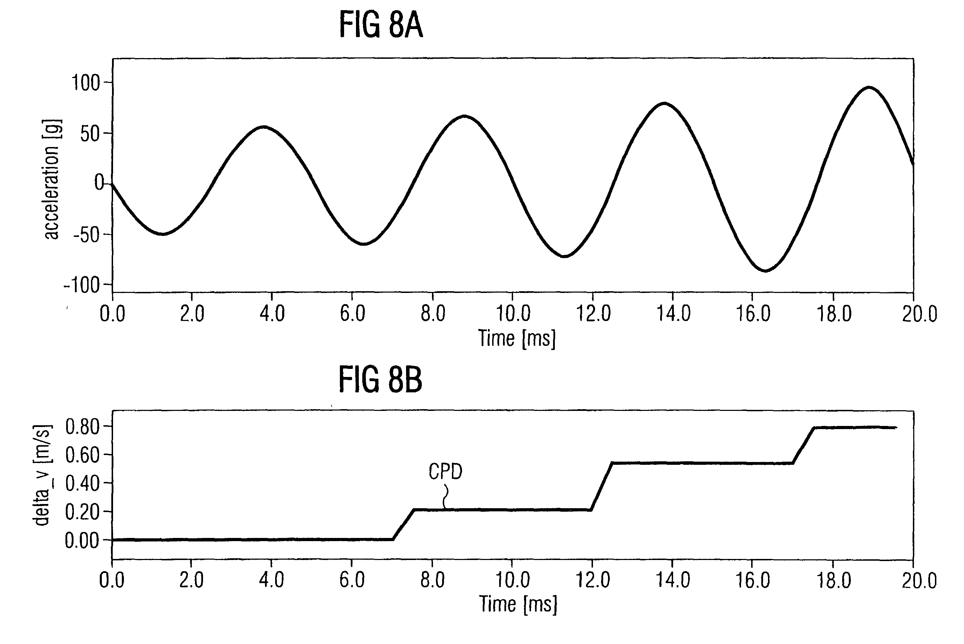

Anhand der Figuren 7 und 8 wird der CPF-Term erläutert. Dieser Term kann eine auslöseerleichternde Anhebung der negativen Schwelle bzw. eine auslöseerleichternde Reduzierung des Schwellenbetrages zurfolge haben. Dabei werden die Extremwerte im Aufprallsignal betrachtet und insbesondere die Koordinaten zweier aufeinander folgender Minima im Aufprallsignal. Figur 7 zeigt zwei solche aufeinander folgende Minima mit den Amplituden $A_{m1}$ und $A_{m2}$. Der CPF-Term liefert ausschliesslich einen Beitrag zur Schwelle, wenn der Pegel des zeitlich später liegenden Minimums $A_{m2}$ größer ist als der Pegel des zeitlich höher liegenden Minimums $A_{m1}$. Nur unter dieser Bedingung kann anhand des Signales von einer sich aufbauenden, schwingenden Signalfront ausgegangen werden. Misuse-Aufprälle dagegen kennzeichnen sich zwar ebenfalls durch starke Oszillation aus, jedoch sind diese Oszillationen über der Zeit abklingend, ausgehend von einem absolut Extremwert zu Beginn des Misuse-Aufpralls. Bei einem realen Aufprall dagegen wachsen mit zunehmender Zeit die Pegel im Beschleunigungssignal und damit auch die Minima entsprechend an. In den CPF-Term geht also insbesondere die Pegeldifferenz zwischen dem zeitlich letzten Minimum und dem zeitlich davorliegendem Minimum proportional ein. Eine Beeinflussung der Schwelle in diesem Sinne wird nur dann getroffen, wenn der letzte Minimumpegel größer als der vorletzte Minimumpegel ist und gleichzeitig eine vorgegebene Zeitspanne zwischen den Minimapegeln nicht überschritten wird, siehe $t_{am2} - t_{am1}$ in Figur 7.

Figur 8 zeigt ein beispielhaftes Beschleunigungssignal mit anwachsenden Schwingungen. Figur 8b zeigt dazu die Beiträge des zugehörigen CPF-Termes zur Schwelle. Vorzugsweise kann der CPF-Term nur dann einen Beitrag zur Schwelle liefern, wenn die Minima einen vorgegebenen Wert $A_{min}$ nach Figur 7 überschritten haben.

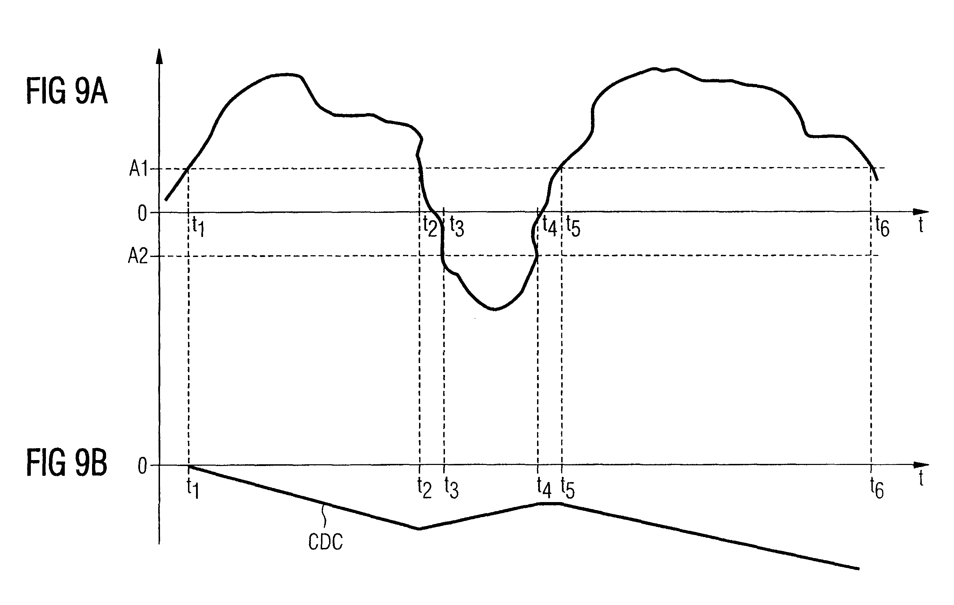

Anhand der Figur 9 wird der CDC-Term erläutert. Figur 9a zeigt ein beispielhaftes Beschleunigungssignal. Figur 9b zeigt den dazugehörigen CDC-Beitrag zum Schwellwert. Dabei liefert der CDC-Term einen die negative Schwelle weiter erniedrigenden, damit den Schwellwertbetrag aber erhöhenden und eine Auslösung erschwerenden Beitrag in den Zeiträumen $t_1 < t < t_2$ und $t_5 < t < t_6$, in denen das Beschleunigungssignal eine vorgegebene positive Schwelle $A_1$ überschreitet. Dies bedeutet, dass innerhalb dieser Zeitspannen das aufgenommene Beschleunigungssignal ein positives Vorzeichen hat und deshalb auf einen Misuse-Aufprall hindeutet. Bei einem realen Aufprall treten gewöhnlich Verzögerungen und damit negative Beschleunigungswerte auf. In vorgenannten Zeiträumen wird deshalb eine Auslösung durch ein betragsmäßiges Anheben der Schwelle erschwert. Im Zeitraum $t_3 < t < t_4$ dagegen wird die negative Schwelle $A_2$ durch das Beschleunigungssignal unterschritten, was für das Vorliegen eines realen Aufpralls spricht. Dementsprechend wird in diesem Zeitraum das Auslösen erleichtert, indem die negative Schwelle angehoben wird und damit der Schwellwertbetrag verringert wird. Es ist insbesondere ersichtlich, dass dieser CDC-Term positive wie negative Werte annehmen kann und damit äussert flexibel auf das Aufprallsignal reagiert. Der CDC-Term kann durch eine obere und untere Schranke in seinem Beitrag zur Schwelle begrenzt werden.

Der vorliegende Algorithmus und dabei insbesondere die Schwellwertgestaltung ist vorzugsweise dafür geeignet, Seitenaufprallschutzmittel auszulösen. Dazu ist vorzugsweise ein ausgelagerter Beschleunigungssensor fahrzeugrandseitig angeordnet. Das vorgeschlagene Verfahren eignet sich in vorteilhafter Weise dazu, ein Seitenaufprallschutzmittel alleine aufgrund der von dem Beschleunigungssensor gelieferten Aufprallsignale auszulösen.

Das vorgeschlagene Verfahren liefert in äussert geeigneter Weise den einzelnen und unterschiedlichen Aufprallarten gerechtwerdende Beiträge zu. Letztendlich kann mit dem vorgeschlagenen Verfahren äussert präzise zwischen einem Fire-und einem Nofire-Aufprall unterschieden werden.

**Patentansprüche**

1. Verfahren zum Steuern eines Insassenschutzmittels in einem Fahrzeug,

-   bei dem ein Aufprallsensor ein Aufprallsignal liefert,
-   bei dem eine aus dem Aufprallsignal abgeleitete Aufprallgröße mit einer Schwelle verglichen wird,
-   bei dem die Schwelle zumindest einen Term enthält, der durch das Aufprallsignal bestimmt ist, und
-   bei dem das Insassenschutzmittel gesteuert wird in Abhängigkeit vom Überschreiten der Schwelle durch die Aufprallgröße,

**dadurch gekennzeichnet,**
**daß** der Term derart ausgebildet ist, daß er je nach Ausbildung des Aufprallsignals einen die Schwelle erhöhenden oder einen die Schwelle erniedrigenden Beitrag liefert, und
**daß** der Term bestimmt ist durch separat voneinander aufsummierte positive und negative Anteile im Aufprallsignal oder einem davon abgeleiteten Signal.

2.  Verfahren nach Anspruch 1, **dadurch gekennzeichnet, daß** der Term bestimmt ist durch einen aus dem Aufprallsignal abgeleiteten Geschwindigkeitsverlust des Fahrzeugs ab Aufprallbeginn.

3.  Verfahren nach Anspruch 1, **dadurch gekennzeichnet, daß** die negativen und die positiven Anteile zueinander ins Verhältnis gesetzt werden, und daß der Term bestimmt ist durch die Differenz zwischen dem Verhältnis und einem Grenzwert.

4.  Verfahren nach Anspruch 3, **dadurch gekennzeichnet, daß** die Differenz mit unterschiedlichen Gewichtfaktoren in den Term eingeht, je nachdem ob das Verhältnis den Grenzwert überschreitet oder unterschreitet.

5.  Verfahren nach einem der vorhergehenden Ansprüche, **dadurch gekennzeichnet, daß** der Term bestimmt ist durch das Überschreiten eines oberen Grenzwertes durch das Aufprallsignal oder durch ein aus dem Aufprallsignal abgeleitetes Signal sowie durch das Unterschreiten eines unteren Grenzwertes durch das Aufprallsignal oder durch ein aus dem Aufprallsignal abgeleitetes Signal, daß der Term einen die Schwelle betragsmäßig erhöhenden Beitrag liefert, wenn der obere Grenzwert durch das Aufprallsignal oder das abgeleitete Signal überschritten wird, daß der Term einen die Schwelle betragsmäßig erniedrigenden Beitrag liefert, wenn der untere Grenzwert durch das Aufprallsignal oder das abgeleitete Signal unterschritten wird.

6.  Verfahren nach einem der vorhergehenden Ansprüche, **dadurch gekennzeichnet, daß** die Schwelle bestimmt ist durch die Differenz der Pegel zweier zeitlich aufeinanderfolgender Extremwerte im Aufprallsignal oder in einem aus dem Aufprallsignal abgeleiteten Signal.

7.  Verfahren nach Anspruch 6, **dadurch gekennzeichnet, daß** die Schwelle betragsmäßig abgesenkt wird abhängig von der Differenz der Pegel.

8.  Verfahren nach einem der vorhergehenden Ansprüche, **dadurch gekennzeichnet, daß** das Aufprallsignal von einem Beschleunigungssensor geliefert wird und durch die aktuelle Fahrzeugbeschleunigung bestimmt ist.

9.  Steuervorrichtung für ein Insassenschutzmittel in einem Fahrzeug, ausgebildet zur Durchführung des Verfahrens nach einem der Ansprüche 1 bis 8.

**Claims**

1.  Method for controlling a passenger protection means in a motor vehicle,

-   in which a crash sensor delivers a crash signal,
-   in which a crash variable derived from a crash signal is compared with a threshold,
-   in which a threshold contains at least one value that is determined by the crash signal, and
-   in which the passenger protection means is controlled depending on whether the crash variable has exceeded the threshold,

**characterized in that**,
the term is formed in such a way that, depending on the formation of the crash signal, it delivers a contribution that increases the threshold or reduces the threshold, and that the term is determined by separately available summed positive and negative components in the crash signal or a signal derived from it.

2.  Method in accordance with Claim 1, **characterized in that** the term is determined by a loss of speed of the vehicle as from the beginning of the crash, derived from the crash signal.

3.  Method in accordance with Claim 1, **characterized in that** the negative and the positive components are set in relationship to each other and that the term is determined by the difference between the ratio and a limit value.

4.  Procedure in accordance with Claim 3, identified by the fact that the difference is included in the term with different weighting factors, depending on whether the ratio overshoots or undershoots the limit value.

5. Method in accordance with one of the previous claims, **characterized in that** the term is defined by exceeding an upper threshold value by a crash signal or by a signal derived from the crash signal and as well as by a crash signal or a signal derived from the crash signal falling below a lower threshold, that the term delivers a contribution increasing the threshold in accordance with an amount, if the upper threshold is exceeded by the crash signal or the derived signal, that the term delivers a contribution reducing the threshold by an amount if the lower threshold is undershot by the crash signal or the derived signal.

6. Method in accordance with one of the previous claims, **characterized in that** the threshold is determined by the difference of the level of two consecutive extreme values in the crash signal or in a signal derived from the crash signal.

7. Method in accordance with Claim 6, **characterized in that** the threshold is reduced in accordance with the amount depending on the difference of the level.

8. Method in accordance with one of the previous claims, **characterized in that** the crash signal is delivered by an acceleration sensor and is determined by the current vehicle acceleration.

9. Control device for a means of protecting passengers in a motor vehicle, designed to perform the method in accordance with one of the Claims 1 to 8.

**Revendications**

1. Procédé pour commander un moyen de protection d'occupant dans un véhicule,

   - dans lequel un capteur d'impact fournit un signal d'impact,
   - dans lequel une grandeur d'impact, dérivée du signal d'impact, est comparée avec un seuil,
   - dans lequel le seuil contient au moins un terme déterminé par le signal d'impact, et
   - dans lequel le moyen de protection d'occupant est commandé en fonction d'un dépassement du seuil par la grandeur d'impact,

     **caractérisé en ce que** le terme est agencé de telle manière qu'il apporte, en relation de la conformation du signal d'impact, une contribution d'augmentation ou de diminution du seuil, et que le terme est déterminé par des parties positives et négatives, séparément additionnées, du signal d'impact ou d'un signal dérivé de ce dernier.

2. Procédé selon la revendication 1, **caractérisé en ce que** le terme est déterminé par une perte de vitesse du véhicule dérivée du signal d'impact dès le commencement de l'impact.

3. Procédé selon la revendication 1, **caractérisé en ce que** les parties positives et négatives sont mises en rapport mutuel, et que le terme est déterminé par la différence entre ce rapport et une valeur limite.

4. Procédé selon la revendication 3, **caractérisé en ce que** la différence est reprise dans le terme avec des facteurs de pondération qui sont différents selon que le rapport dépasse la valeur limite vers le haut ou vers le bas.

5. Procédé selon l'une des revendications précédentes, **caractérisé en ce que** le terme est déterminé par le dépassement d'une valeur limite supérieure par le signal d'impact ou par un signal dérivé du signal d'impact, ou par le sous-dépassement d'une valeur limite inférieure par le signal d'impact ou par un signal dérivé du signal d'impact, que le terme fournit un apport augmentant la valeur du seuil lorsque la valeur limite supérieure est dépassée vers le haut par le signal d'impact ou le signal dérivé, que le terme fournit un apport diminuant la valeur du seuil lorsque la valeur limite inférieure est dépassée vers le bas par le signal d'impact ou le signal dérivé.

6. Procédé selon l'une des revendications précédentes, **caractérisé en ce que** le seuil est déterminé par la différence des niveaux de deux valeurs extrêmes successives dans le signal d'impact ou dans un signal dérivé du signal d'impact.

7. Procédé selon la revendication 1, **caractérisé en ce que** la valeur du seuil est abaissée en fonction de la différence des niveaux.

8. Procédé selon l'une des revendications précédentes, **caractérisé en ce que** le signal d'impact est fourni par un capteur d'accélération et est déterminé par l'accélération actuelle du véhicule.

9. Dispositif de commande d'un moyen de protection d'occupant dans un véhicule, agencé pour la mise en oeuvre du procédé selon l'une des revendications 1 à 8.

# FIG 1

# FIG 3

| ☐ Threshold = | → Const | // Constant |
| | ⟺ Velocity | // Velocity |
| | → CPF | // Crash Pulse Function |
| | ⟺ ASF | // Acceleration Symmetry & Frequency |
| | ⟺ CDC | // Crash Direction Correlation |

# FIG 2

EP 1 107 887 B1

# FIG 4

# FIG 6

## FIG 5A

## FIG 5B

FIG 7

## FIG 8A

## FIG 8B

EP 1 107 887 B1

FIG 9A

A1

0    t₁                t₂ t₃      t₄ t₅              t₆    t

A2

FIG 9B    0    t₁                t₂ t₃      t₄ t₅              t₆    t

CDC

EP 1 107 887 B1

15